# EUROPÄISCHE PATENTSCHRIFT

(11) **EP 1 147 654 B1**
(45) Veröffentlichungstag und Bekanntmachung des Hinweises auf die Patenterteilung: **16.04.2003**
(21) Anmeldenummer: 99962092.5
(22) Anmeldetag: 29.11.1999
(51) Int. Cl.: H04M 15/00, H04L 12/14, G07F 7/10

(54) **VERFAHREN ZUR VERRECHNUNG VON AUS DEM INTERNET ABRUFBAREN LEISTUNGEN**
METHOD FOR BILLING SERVICES WHICH CAN BE RETRIEVED FROM THE INTERNET
PROCEDE DE FACTURATION DE SERVICES FOURNIS PAR L'INTERNET

(30) Priorität: 27.11.1998 DE 19854860
(43) Veröffentlichungstag der Anmeldung: 24.10.2001
(73) Patentinhaber: Heering, Thomas, 01277 Dredsen (DE)
(72) Erfinder: Heering, Thomas, 01277 Dredsen (DE)
(74) Vertreter: Kunz, Herbert, Dr.
(86) Internationale Anmeldenummer: DE9903771
(87) Internationale Veröffentlichungsnummer: WO00033557

(56) Entgegenhaltungen:
- EP-A- 0 765 068
- WO-A-96/37848
- WO-A-97/01920
- WO-A-97/29584

## Beschreibung

Die Erfindung betrifft ein Verfahren zur Verrechnung von Leistungen, insbesondere von auf elektronischem Wege aus dem Internet abrufbaren Leistungen.

Mit der Ausweitung der elektronischen Medien hat auch der Waren- und Dienstleistungsvertrieb auf diesem Wege erheblich zugenommen. Es ist mittlerweile üblich, daß in besonderen Werbesendungen im Femsehen Produkte vorgestellt werden, die dann telefonisch bestellt werden können. Auch im internet besteht in zunehmendem Maße die Möglichkeit, angebotene Waren oder Dienstleistungen unmittelbar zu bestellen. Solange die Waren auf herkömmlichen Wegen, also beispielsweise per Post oder Spedition, ausgeliefert werden, wird meist an der traditionellen Verrechnung der erbrachten Leistungen, beispielweise per Nachnahme oder gegen Rechnung, festgehalten. Nachteil dieses Systems sind jedoch erhebliche Nebenkosten durch erforderliche Mahnungen und durch Stornierungen in nicht unerheblicher Anzahl. Der Verwaltungsaufwand steht gerade bei Niedrigpreisangeboten in keinem Verhältnis zum Warenwert.

Weiterhin ist die Verrechnung der erbrachten oder zu erbringenden Leistungen über Kreditkarten oder im Lastschriftverfahren verbreitet. Schätzungen gehen jedoch davon aus, daß die erbrachten Leistungen in etwa 40% der Fälle durch Kreditkartenmißbrauch oder zurückgenommene Lastschriften nicht verrechnet werden können. Besonders schwerwiegend trifft dies Anbieter, die in Vorleistung treten, oder deren erbrachte Leistung nicht rückforderbar ist. Die zu erwartenden Verluste durch Mißbrauch sind in die geforderten Preise einzukalkulieren, was die Angebote zulasten der ehrlichen Abnehmer unattraktiv macht.

Das Internet bietet neben dem klassischen Angebot von Waren auch die Möglichkeit des Herunterladens von Dateien. Beispielsweise können Informationsdateien, Bilddateien oder Programme heruntergeladen werden. Die Verrechnung solcher Leistungen ist ebenfalls problematisch. Der Abnehmer ist an einer sofortigen Lieferung interessiert, die technisch möglich ist. Die Leistung würde erheblich an Attraktivität verlieren, wenn sie erst nach Abwicklung der Zahlung auf herkömmlichem Wege erbracht werden würde. Oft besteht jedoch seitens des Interessenten eine gewisse Scheu, die Nummer seiner Kreditkarte bekanntzugeben, damit der geforderte Betrag abgebucht werden kann. Für den Anbieter hingegen bestehen die oben beschriebenen Risiken des Mißbrauchs. Außerdem fallen im Kreditkartenverkehr hohe Nebenkosten an, die bei geringen Beträgen in keinem Verhältnis zum Wert der erbrachten Leistung stehen.

Der vorliegenden Erfindung liegt die Aufgabe zugrunde, ein Verrechnungsverfahren für Leistungen zu schaffen, das eine sofortige Verrechnung einer zu erbringenden Leistung sicherstellt.

Erfindungsgemäß wird die Aufgabe durch ein Verfahren zur Verrechnung von Leistungen mit den Merkmalen des Patentanspruchs 1 gelöst. Die Merkmale des Oberbegriffs des Patentanspruchs 1 sind aus dem Dokument EP-A-0 765 068 (AT & T Corp.) bekannt.

Das erfindungsgemäße Verfahren dient insbesondere zur Verrechnung von auf elektronischem Wege aus dem Internet abrufbaren Leistungen. Es umfaßt zunächst die Übermittlung der Rufnummer eines gebührenpflichtigen Service-Telekommunikationsanschlusses (sogenannter Premium-Rate-Anschluß) vom Leistungsanbieter an den Leistungsabnehmer. Gebührenpflichtige Serviceanschlüsse sind mittlerweile bei allen Telekommunikationsgesellschaften verfügbar. Für die Anwahl eines solchen Serviceanschlusses wird dem Anwählenden pro Zeiteinheit ein bestimmter Betrag belastet und mit der nächsten Telefonrechnung in Rechnung gestellt. Der Inhaber des Anschlusses erhält von dem in Rechnung gestellten Betrag einen bestimmten Anteil. Beispielsweise sind in Deutschland derzeit die sogenannten "0190-Nummern" in Betrieb, für die dem Anwählenden ein Betrag zwischen DM 0,80 und DM 3,60 pro Minute in Rechnung gestellt wird, von dem die Telefongesellschaft ca. DM 0,60 einbehält. Der restliche Betrag wird dem Anschlußinhaber gutgeschrieben. Als nächster Verfahrensschritt wird vom Leistungsanbieter überwacht, ob zu dem angegebenen Serviceanschluß eine Leitung aufgebaut wird. Bejahendenfalls wird über den gebührenpflichtigen Serviceanschluß der für die angeforderte Leistung geforderte Betrag belastet und danach die angeforderte Leistung freigegeben.

Beispielsweise kann ein Computerprogramm, das aus dem Internet heruntergeladen werden soll, auf diesem Wege verrechnet werden. Der Interessent stößt bei seiner Suche im Internet auf das Angebot eines Anbieters, ein Computerprogramm herunterzuladen. Nach dem Anfordern des Programmes wird ihm vom Anbieter eine Servicerufnummer genannt, beispielsweise durch Einblendung auf der entsprechenden Internet-Web-Seite. Der Kunde wählt die entsprechende Servicerufnummer an. Das Zustandekommen dieser Verbindung wird vom Leistungsanbieter überwacht, beispielsweise auf elektronischem Wege. Sobald die Verbindung zustande gekommen ist, beginnt die Verrechnung der angeforderten Leistung über die Gebühren für den Serviceanschluß. Nach Abschluß der Verrechnung wird die angeforderte Leistung erbracht. Die Datei kann heruntergeladen werden.

Eine Weiterentwicklung des erfindungsgemäßen Verfahrens sieht vor, daß mit der Übermittlung der Servicerufnummer durch den Leistungsanbieter gleichzeitig ein bestimmter Auftragscode übermittelt wird. Der Code kann mehrstellig sein. Ein Code kann einmalig sein oder auch mehrmals vergeben werden, wenn sichergestellt ist, daß die verrechneten Beträge dem zugehörigen Auftrag zugerechnet werden können. Der Kunde ruft dann die Servicerufnummer an und gibt anschließend den Auftragscode zur Zuordnung des Anrufs zum Auftrag an.

Die Codevergabe kann vorteilhaft so gelöst werden, daß als Serviceanschluß ein durchwahlfähiger Anschluß verwendet wird. Die jeweilige Durchwahlendnummer wird dann als Code vergeben. Die Zuordnung des Anrufs zum Auftrag ist gewährleistet

Die Belastung durch den Leistungsanbieter erfolgt vorteilhaft erst, nachdem der vergebene Auftragscode vom Leistungsabnehmer bestätigt worden ist. Auf diesem Wege wird sichergestellt, daß die Leistung demjenigen Anrufer in Rechnung gestellt wird, der sie später auch empfängt.

Vorzugsweise wird die aufgebaute Serviceleitung nach Erreichen der zur vollständigen Verrechnung der angeforderten Leistung erforderlichen Zeit seitens des Leistungsanbieters selbsttätig abgebrochen.

Um unübersichtliche Teilzahlungen zu vermeiden, sieht eine bevorzugte Ausführungsform des erfindungsgemäßen Verfahrens vor, daß keine Belastung erfolgt, falls die Serviceleitung vor Erreichen der vollständigen Verrechnung unterbrochen wird.

Im Falle des Erbringens einer in mehrere Schritte unterteilbaren Leistung, beispielsweise falls mehrere voneinander unabhängige Dateien aus dem Internet heruntergeladen werden sollen, kann auch eine kontinuierliche Verrechnung erfolgen.

Das erfindungsgemäße Verfahren ermöglicht die sofortige Verrechnung von angeforderten Leistungen, unabhängig vom Risiko des Kreditkartenbetruges oder der Rücknahme einer erteilten Einzugsermächtigung. Die Inrechnungstellung der angeforderten Leistung erfolgt bequem über die Telefonrechnung. Über die Auflistung der angewählten Servicerufnummem in der Telefonrechnung können die in Rechnung gestellten Beträge genau nachvollzogen werden.

Ein bevorzugtes Ausführungsbeispiel der Erfindung wird im folgenden anhand der beigefügten Abbildungen näher erläutert:

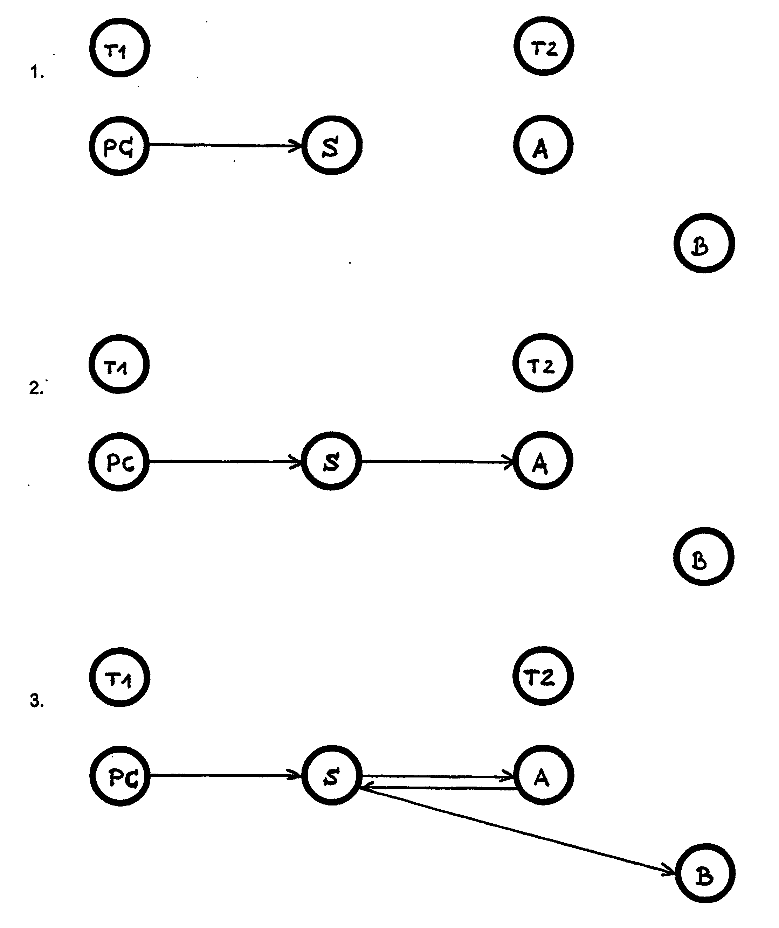

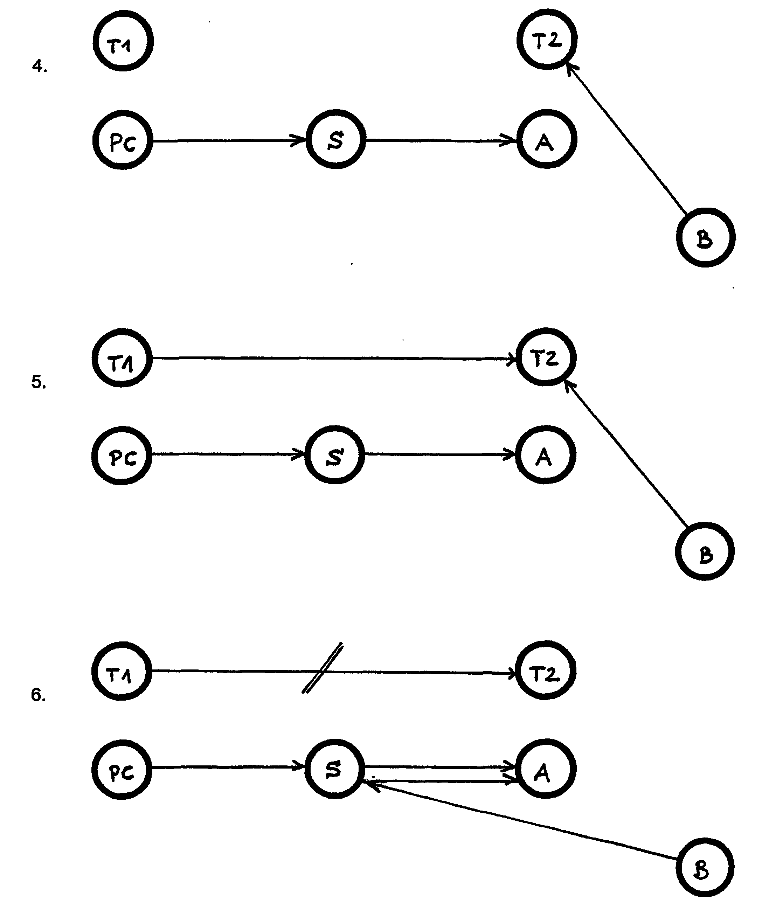

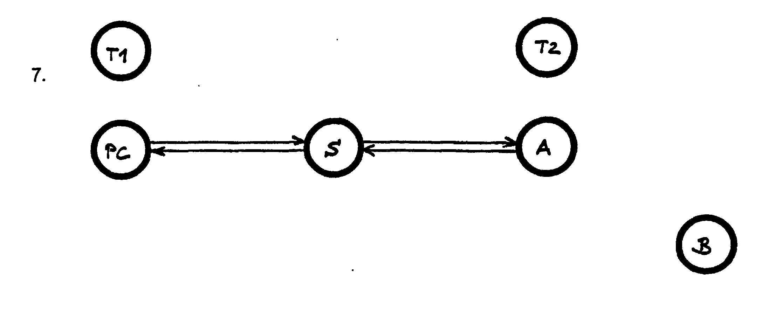

Die Figuren 1 - 7 zeigen den schrittweisen Ablauf des erfindungsgemäßen Verfahrens am Beispiel einer aus dem Internet herunterzuladenden Datei.

In Schritt 1 nimmt der Leistungsabnehmer mit seinem Computer (PC) Kontakt zu dem Internet-Server (S) auf. Im Internet ist ein Leistungsanbieter mit seiner Webseite (A) vertreten.

In Schritt 2 nimmt der Leistungsabnehmer über den Internet-Server (S) Kontakt zum Anbieter über dessen Webseite (A) auf. Dort findet er verschiedene Leistungsangebote, z.B. eine Datei, die er gerne herunterladen möchte. Die einzelnen Leistungsangebote sind mit entsprechenden Preisangaben versehen. Der Leistungsabnehmer wählt die von ihm gewünschte Datei durch Anklicken des entsprechenden Symbols aus.

Danach wird gemäß Verfahrensschritt 3 vom Leistungsanbieter (A) eine Verbindung über den Internet-Server (S) zu einer Überwachungsvorrichtung (B) hergestellt. Dabei wird auch der für die angeforderte Leistung geforderte Betrag sowie die Rufnummer eines dem Leistungsanbieter (A) zugeordneten, gebührenpflichtigen Service-Telefonanschlusses (T2) übermittelt. Die Rufnummer des Service-Telefonanschlusses (T2) wird außerdem auf der Internet-Web-Seite des Anbieters für den Abnehmer sichtbar angezeigt. Der Abnehmer wird aufgefordert, den Service-Anschluß anzuwählen.

In Schritt 4 des Verfahrens nimmt die Überwachungsvorrichtung (B) Kontakt zu dem Service-Telefonanschluß (T2) des Leistungsanbieters (A) auf und überwacht das Zustandekommen einer Verbindung.

In Schritt 5 des Verfahrens wählt der Leistungsabnehmer über einen Telefonanschluß (T1) den Service-Anschluß (T2) des Leistungsanbieters (A) an. Die ihm für diesen Anruf in Rechnung gestellten Gebühren werden abzüglich einer Servicegebühr für die Telekommunikationsgesellschaft dem Inhaber des Service-Anschlusses (T2) gutgeschrieben. Die Überwachungsvorrichtung (B) überwacht die Dauer der Verbindung.

In Schritt 6 meldet die Überwachungsvorrichtung (B) das Erreichen der erforderlichen Verbindungsdauer für die geforderte Gebühr über den Internet-Server (S) an den Leistungsanbieter (A). Der geforderte Betrag ist damit vollständig verrechnet. Die Verbindung zwischen dem Anschluß (T1) des Leistungsabnehmers und dem Service-Anschluß (T2) wird unterbrochen. Dies kann entweder durch den Leistungsanbieter (A) erfolgen oder unmittelbar von der Überwachungsvorrichtung (B) ausgelöst werden.

In Schritt 7 erbringt dann der Leistungsanbieter (A) die vom Leistungsabnehmer angeforderte Leistung. Die gewünschte Datei kann heruntergeladen werden.

Das erfindungsgemäße Verfahren kann abnehmerseitig automatisch abgewickelt werden. Ein Computer kann die übermittelte Rufnummer des Service-Anschlusses erkennen und selbsttätig anwählen. Vorzugsweise kann dies über das Internet erfolgen. Die Trennung der Datenwege des Service-Anschlusses und der eigentlichen Internet-Datenleitung erfolgt im Internet.

## Patentansprüche

1. Verfahren zur Verrechnung von Leistungen, insbesondere von auf elektronischem Wege aus dem Internet abrufbaren Leistungen, bestehend aus folgenden Schritten:
a) Übermittlung der Rufnummer eines gebührenpflichtigen Service-Telekommunikationsanschlusses (Premium-Rate-Anschluß) vom Leistungsanbleter an den Leistungsabnehmer;
b) Überwachung des Leitungsaufbaus zu dem übermittelten Serviceanschluß seitens des Leitungsanbieters;
c) Verrechnung der angeforderten Leistung Ober den Serviceanschluß;
d) Freigabe der angeforderten Leistung durch den Leistungsanbieter,
wobei mit der Übermittlung der Servicerufnummer seitens des Leistungsanbieters ein Auftragscode vergeben und an den Leistungsabnehmer übermittelt wird, **dadurch gekennzeichnet, daß** als Serviceanschluß ein durchwahlfählger Anschluß verwendet wird, dessen Endnummer als Auftragscode verwendet wird.

2. Verfahren nach Anspruch 1, **dadurch gekennzeichnet, daß** nach Aufbau der Servicaleitung eine Verrechnung der angeforderten Leistung erst erfolgt, nachdem der vergebene Auftragscode vom Leistungsabnehmer bestätigt worden ist.

3. Verfahren nach Anspruch 1 oder 2, **dadurch gekennzeichnet, daß** die Serviceleitung seitens des Leistungsanbieters nach vollständiger Verrechnung der angeforderten Leistung unterbrochen wird.

4. Verfahren nach einem der Ansprüche 1 bis 3, **dadurch gekennzeichnet, daß** keine Verrechnung erfolgt, falls die Serviceleitung vor vollständiger Verrechnung der angeforderten Leistung unterbrochen wird.

5. Verfahren nach einem der Ansprüche 1 bis 4, **dadurch gekennzeichnet, daß** die Verrechnung kontinuierlich parallel zur Leistungserbringung erfolgt.

6. Verfahren nach einem der Ansprüche 1 bis 5, **dadurch gekennzeichnet, daß** der Leitungsaufbau zu dem Serviceanschluß abnehmerseitig automatisch erfolgt.

7. Verfahren nach einem der Ansprüche 1 bis 6, **dadurch gekennzeichnet, daß** die Verbindung zu dem Serviceanschluß über das internet aufgebaut wird.

## Claims

1. Method for billing services, particularly services, which are electronically available from the Internet, consisting of the following steps:
a) Transmission of the telephone number of a billable service-telecommunication connection (Premium-Rate Connection) from the provider to the client;
b) Provider's monitoring of the line build-up to the transmitted service connection;
c) Billing of the requested service via the service connection;
d) Release of the requested service by the provider,
wherein, with the provider's transmission of the service number, an order code is allocated and transmitted to the client, **characterized in that** a direct-dialing connection is used as service connection, whose final number is used as the order code.

2. Method according to claim 1, **characterized in that** after establishment of the service line, a billing of the requested services will not be effected until the allocated order code will be confirmed by the client.

3. Method according to claim 1 or 2, **characterized in that** the service line will be interrupted by the provider after complete billing of the requested service.

4. Method according to one of claims 1 to 3, **characterized in that** no billing will be effected, if the service line is interrupted before complete billing of the requested services.

5. Method according to one of claims 1 to 4, **characterized in that** the billing is carried out continuously in parallel with the service performance.

6. Method according to one of claims 1 to 5, **characterized in that** the line build-up to the service connection is automatically effected for the client.

7. Method according to one of claims 1 to 6, **characterized in that** the connection to the service connection is build-up via the Internet.

## Revendications

1. Procédé pour la compensation des services, particulièrement des services qui sont consultables en voie électronique par l'Internet, consistant des pas suivants:
a) Transmission du numéro de téléphone d'un branchement payant de services de télécommunication (Premium-Rate-Branchement) du prestataire au client;
b) Supervision de l'établissement de la ligne au branchement de service transmis du côté du prestataire;
c) Compensation des services demandés, effectué par le branchement de service;
d) Déblocage des services demandés, effectué par le prestataire,
dans lequel, avec la transmission du numéro de téléphone d'un branchement service, effectué par le prestataire, un code de commande est attribué et transmis au client, **caractérisé en ce que** un branchement étant capable pour postes directes est utilisé comme branchement service, le numéro final duquel sera utilisé comme code de commande.

2. Procédé selon la revendication 1, **caractérisé en ce que**, après établissement de la ligne service, une compensation ne sera effectuée que quand le code de commande attribué a été confirmé par le client.

3. Procédé selon la revendication 1 ou 2, **caractérisé en ce que** la ligne service sera coupé par le prestataire après la compensation totale du service demandé.

4. Procédé selon une des revendications 1 à 3, **caractérisé en ce que** la compensation ne sera pas effectuée, si la ligne service sera coupée avant la compensation complète des services demandés.

5. Procédé selon une des revendications 1 à 4, **caractérisé en ce que** la compensation sera continuellement effectuée parallèle à la prestation du service.

6. Procédé selon une des revendications 1 à 5, **caractérisé en ce que** l'établissement de ligne au branchement service sera effectué automatiquement pour le client.

7. Procédé selon une des revendications 1 à 6, **caractérisé en ce que** la liaison au branchement service sera établie par l'Internet.
